# EUROPEAN PATENT APPLICATION

(11) **EP 3 456 232 A1**
(43) Date of publication of application: **20.03.2019**
(21) Application number: 18191916.8
(22) Date of filing: 31.08.2018
(51) Int. Cl.: A47L 9/22, F04D 29/059, F04D 29/62, F04D 29/66, H02K 5/15, H02K 5/16, H02K 7/08, F16C 33/78, F16C 19/04, F16C 19/52, F16C 27/06, F16C 27/08

(54) **MOTOR, BLOWER, AND VACUUM CLEANER**

(30) Priority: 13.09.2017 US 201762557799 P; 13.04.2018 JP 2018077872
(71) Applicant: Nidec Corporation, Minami-ku, Kyoto-shi, Kyoto 601-8205 (JP)
(72) Inventor: SAWASAKI, Motoi, Kyoto, Kyoto (JP); IKENO, Shota, Kyoto, Kyoto (JP); KONDO, Shoma, Kyoto, Kyoto (JP)
(74) Representative: Zimmermann, Tankred Klaus

(57) **Abstract**

A motor (1) includes a rotor (10) that includes a shaft disposed along a central axis extending vertically, a stator (20) that faces the rotor (10) in a radial direction, a bearing section (30) that supports the rotor (10) such that the rotor (10) is rotatable with respect to the stator (20), and a bracket (40) that holds the bearing section (30). The bracket (40) includes a cylindrical bracket cylindrical portion (42) that is disposed outwardly of the bearing section (30) in the radial direction, and a bracket bottom portion that includes a bracket opening portion. The bearing section (30) includes a bearing that rotatably supports the shaft, and a plate portion (32) disposed below the bearing and extending in a direction orthogonal to the central axis. At least a part of the plate portion (32) faces the bracket opening portion in an axial direction.

## Description

### Field of the Invention

The present invention relates to a motor, a blower, and a vacuum cleaner.

### Description of the Related Art

Japanese Unexamined Patent Application Publication No. 2014-92170 discloses a motor that is capable of further suppressing the vibration of a rotor. A motor case of the motor includes a first bearing accommodating portion and a second bearing accommodating portion. The rotor disposed in the inside of the motor case includes a rotary shaft provided with an output end portion that outputs rotation at one end portion in an axial direction. A first ball bearing that is disposed with a damping gap between it and the first bearing accommodating portion and that rotatably supports the rotary shaft is accommodated in the first bearing accommodating portion. A second ball bearing that is fitted to an inner peripheral surface of the second bearing accommodating portion and that is fitted to an outer peripheral surface of the rotary shaft and rotatably supports the rotary shaft on an output end portion side of the first ball bearing is accommodated in the second bearing accommodating portion. Elastic members that are provided consecutively in a peripheral direction and that contact both the first ball bearing and the first bearing accommodating portion are provided at two locations spaced apart from each other in the axial direction in the damping gap.

When the damping gap is provided between the bearing accommodating portion and the ball bearing, and the elastic members that contact both the ball bearing and the bearing accommodating portion are provided in the damping space, mounting may be performed with a center line in the axial direction of the ball bearing tilted with respect to a central axis of the motor.

### SUMMARY OF THE INVENTION

A motor according to an exemplary embodiment of the present invention includes a rotor that includes a shaft that is disposed along a central axis extending vertically, a stator that faces the rotor in a radial direction, a bearing section that supports the rotor such that the rotor is rotatable with respect to the stator, and a bracket that holds the bearing section. The bracket includes a cylindrical bracket cylindrical portion that extends in an axial direction and that is disposed outwardly of the bearing section in the radial direction, and a bracket bottom portion that extends inwardly in the radial direction from a lower end portion of the bracket cylindrical portion and that includes a bracket opening portion extending therethrough in the axial direction. The bearing section includes a bearing that rotatably supports the shaft, and a plate portion that is disposed below the bearing and that extends in a direction orthogonal to the central axis. At least a part of the plate portion faces the bracket opening portion in the axial direction.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a blower including a motor according to an exemplary embodiment of the present invention;
Fig. 2 is a longitudinal sectional view of the blower including the motor according to the exemplary embodiment of the present invention;
Fig. 3 is an enlarged longitudinal sectional view of a bearing section and the vicinity thereof;
Fig. 4 is a diagram for describing step a) and step b);
Fig. 5 is a diagram for describing step c);
Fig. 6 is a diagram for describing step d);
Fig. 7 is a sectional view of a jig that is used in a method of manufacturing the motor according to an exemplary embodiment of the present invention;
Fig. 8 is a sectional perspective view of the blower according to the exemplary embodiment of the present invention;
Fig. 9 is a perspective view of a vacuum cleaner according to an exemplary embodiment of the present invention;
Fig. 10 is a diagram for describing a modification of the motor according to the exemplary embodiment of the present invention; and
Fig. 11 is a flowchart showing a method of manufacturing the motor according to an exemplary embodiment of the present invention.

### DETAILED DESCRIPTION OF THE PREFERRED EMBODIMENTS

Exemplary embodiments of the present invention are described in detail below with reference to the drawings. In the description below, a case in which a motor according to an exemplary embodiment of the present invention is applied to a blower is described as an example. However, the motor of the present invention is widely applicable to electric devices other than a blower.

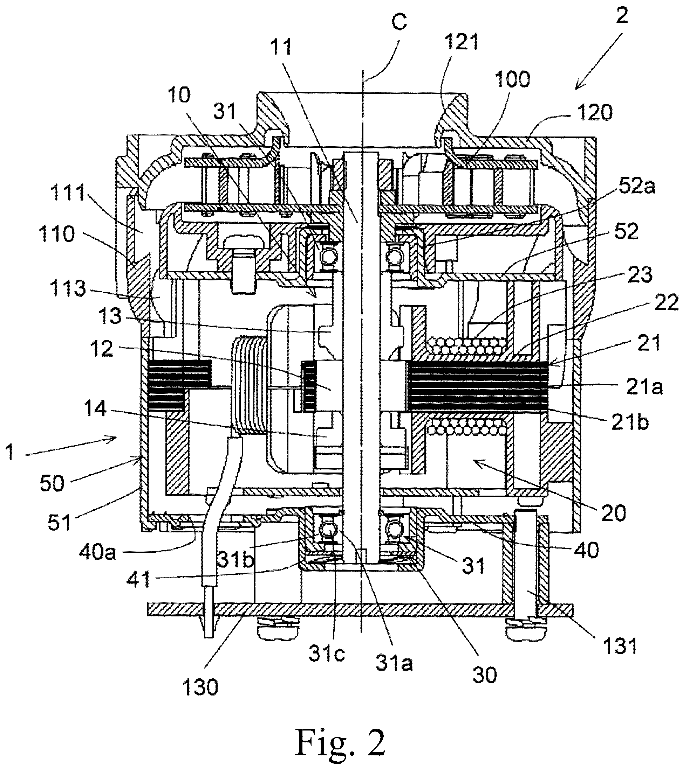

In the present description, in describing a motor 1 and a blower 2, a direction parallel to a central axis C of the motor 1 shown in Fig. 2 is called an "axial direction", a direction orthogonal to the central axis C is called a "radial direction", and a direction along an arc extending around the central axis C is called a "peripheral direction". In the present description, the shape and positional relationships of each portion are described with the axial direction being a vertical direction and a side of a stator 20 with respect to a bracket 40 of the motor 1 shown in Fig. 2 being an upper side. The term "vertical direction" is a name that is used simply for description, and does not limit the actual positional relationships and directions.

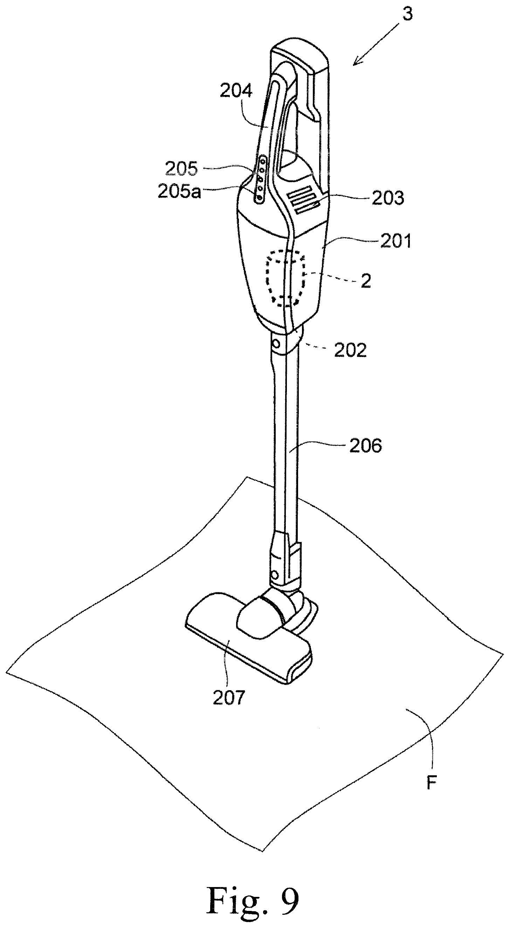

In the present description, in describing a vacuum cleaner 3, the shape and positional relationships of each portion are described with a direction towards a floor F (cleaning surface to be cleaned) in Fig. 9 being "downward", and a direction away from the floor F being "upward". These directions are names that are used simply for description, and do not limit the actual positional relationships and directions.

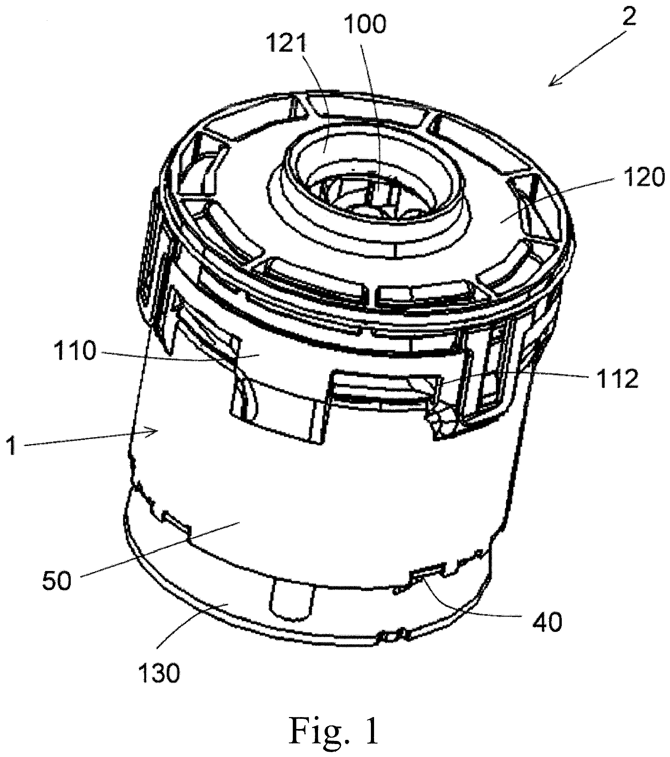

Fig. 1 is a perspective view of the blower 2 including the motor 1 according to an exemplary embodiment of the present invention. Fig. 2 is a longitudinal sectional view of the blower 2 including the motor 1 according to the exemplary embodiment of the present invention. As shown in Figs. 1 and 2, the motor 1 includes a rotor 10, a stator 20, a bearing section 30, and the bracket 40. The motor 1 further includes a motor housing 50.

The rotor 10 rotates around the central axis C extending vertically. The rotor 10 includes a shaft 11. The rotor 10 further includes a magnet 12, an upper spacer 13, and a lower spacer 14.

The shaft 11 is disposed along the central axis C. The central axis C extends vertically. The shaft 11 is, for example, a columnar member made of metal. The magnet 12 has a cylindrical shape extending in the axial direction, and is fixed to the shaft 11 that is disposed inwardly of the magnet 12 in the radial direction. An outer peripheral surface of the magnet 12 is alternately magnetized at an N pole and an S pole in the peripheral direction. The upper spacer 13 and the lower space 14 each have a cylindrical shape extending in the axial direction. The upper spacer 13 and the lower spacer 14 sandwich the magnet 12 from above and below the magnet 12 and are fixed to the shaft 11.

The stator 20 is an armature that generates magnetic flux in accordance with driving electric current. The stator 20 faces the rotor 10 in the radial direction. In the present embodiment, the stator 20 is disposed outwardly of the rotor 10 in the radial direction. That is, the motor 1 of the present embodiment is a so-called inner-rotor-type motor. However, the motor of the present invention may be a so-called outer-rotor-type motor in which at least a part of the rotor is disposed outwardly of the stator in the radial direction.

In detail, the stator 20 includes a stator core 21, an insulator 22, and a plurality of coils 23. The stator core 21 includes a ring-shaped core back portion 21a and a plurality of teeth portions 21b extending inwardly from the core back portion 21a in the radial direction. The core back portion 21a has a ring shape extending around the central axis C. The plurality of teeth portions 21b are disposed at equal intervals in the peripheral direction. The stator core 21 may be formed by joining a plurality of core pieces. The stator core 21 may be formed by laminating a plurality of magnetic steel plates and performing machining.

The insulator 22 is an insulating member that covers at least a part of the stator core 21. The plurality of coils 23 are formed by winding conducting wires around each teeth portion 21b via the insulator 22. The teeth portions 21b and the coils 23 are electrically insulated from each other by interposing the insulator 22 therebetween.

The bearing section 30 supports the rotor 10 such that the rotor 10 is rotatable with respect to the stator 20. The bearing section 30 includes a bearing 31. The bearing 31 rotatably supports the shaft 11. In other words, the motor 1 includes the bearing 31 that supports the shaft 11 such that the shaft 11 is rotatable with respect to the stator 20. In the present embodiment, bearings 31 are disposed on an upper side and a lower side of the stator 20. The bearing section 30 is disposed on the lower side of the stator 20. The bearing 31 that the bearing section 30 includes is the bearing 31 that is disposed on the lower side of the stator 20.

In the present embodiment, the bearing 31 is a ball bearing. The bearing 31 includes an inner ring 31a, an outer ring 31b, and a rolling body 31c. The inner ring 31a is fixed to the shaft 11 that is disposed on a radial-direction inner side. The outer ring 31b is fixed to a member that holds the bearing 31. The rolling body 31c is disposed between the inner ring 31a and the outer ring 31b in the radial direction. The rolling body 31c is made up of a plurality of balls. By providing the rolling body 31c, the inner ring 31a rotates with respect to the outer ring 31b. However, the bearing 31 is not limited to a ball bearing, and may be, for example, a sleeve bearing.

The bracket 40 holds the bearing section 30. In other words, the bracket 40 holds the bearing 31. In the present embodiment, the bracket 40 is disposed on the lower side of the stator 20. The bracket 40 is fixed to the motor housing 50. The bracket 40 is, for example, a plate-shaped metal member. The bracket 40 includes a bracket recessed portion 41 that is disposed at a central portion thereof and that is recessed downward in the axial direction and holds the bearing section 30. The bracket 40 has at least one bracket through hole 40a that extends through the bracket 40 in the axial direction and that is disposed outwardly of the bracket recessed portion 41 in the radial direction. The details of the bracket recessed portion 41 is described later.

The motor housing 50 is made up of, for example, a metal member. The motor housing 50 includes a housing cylindrical portion 51 and a housing cover portion 52. The housing cylindrical portion 51 has a cylindrical shape extending in the axial direction. The housing cylindrical portion 51 is disposed outwardly of the stator 20 in the radial direction. The stator 20 is fixed to the housing cylindrical portion 51. The housing cover portion 52 has a disc shape extending inwardly in the radial direction from an upper end portion of the housing cylindrical portion 51. The motor housing 50 has the form of a cylindrical container having a cover, and accommodates the rotor 10 and the stator 20. The housing cover portion 52 includes a cylindrical bearing holding portion 52a that is disposed at a central portion thereof and that protrudes towards the upper side. The bearing holding portion 52a holds the bearing 31 that is disposed on the upper side of the stator 20. The shaft 11 that supports the bearing 31 protrudes upward in the axial direction from the housing cover portion 52.

When electric power is supplied to the coils 23 from an electric power supply, magnetic flux is generated at the plurality of teeth portions 21b. By the interaction of the magnetic flux generated at the teeth portions 21b and the magnetic field that is formed by the magnet 12, a peripheral-direction torque is produced. As a result, the rotor 10 including the shaft 11 rotates around the central axis C.

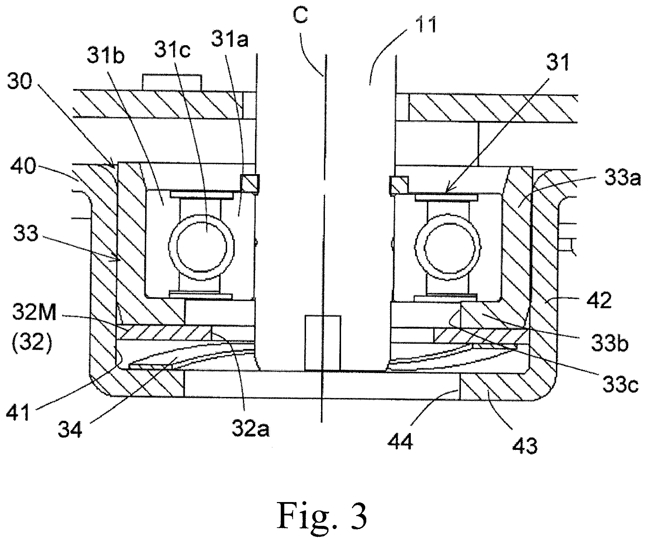

Fig. 3 is an enlarged longitudinal sectional view of the bearing section 30 and the vicinity thereof. As shown in Fig. 3, the bracket 40 includes a cylindrical bracket cylindrical portion 42 and a bracket bottom portion 43. The bracket cylindrical portion 42 and the bracket bottom portion 43 form the aforementioned bracket recessed portion 41.

The bracket cylindrical portion 42 is provided at the central portion of the bracket 40. The bracket cylindrical portion 42 extends in the axial direction. The bracket cylindrical portion 42 has a cylindrical shape extending around the central axis C. The bracket cylindrical portion 42 is disposed outwardly of the bearing section 30 in the radial direction. The bracket cylindrical portion 42 surrounds the bearing section 30.

The bracket bottom portion 43 extends inwardly in the radial direction from a lower end portion of the bracket cylindrical portion 42. The bracket bottom portion 43 includes a bracket opening portion 44 extending therethrough in the axial direction. In the present embodiment, the bracket opening portion 44 has a circular shape extending around the central axis C. However, the shape of the bracket opening portion 44 may be other shapes, such as a polygonal shape or an elliptical shape.

As shown in Fig. 3, the bearing section 30 includes the bearing 31 and a plate portion 32. In the present embodiment, the bearing section 30 further includes a bearing bush 33. The bearing section 30 may further include an elastic member 34. The bearing 31 is held in the inside of the bracket recessed portion 41.

The plate portion 32 is disposed below the bearing 31. The plate portion 32 extends in a direction orthogonal to the central axis C. The entire plate portion 32 need not be a plate. At least a part of the plate portion 32 may be a plate. The plate portion 32 is disposed inwardly of the bracket cylindrical portion 42 in the radial direction. The plate portion 32 is held in the inside of the bracket recessed portion 41. At least a part of the plate portion 32 faces the bracket opening portion 44 in the axial direction. In the present embodiment, a part of the plate portion 32 faces the bracket opening portion 44 in the axial direction. In other words, a part of the plate portion 32 overlaps the bracket opening portion 44 in the axial direction, and is exposed to the outside.

According to this structure, it is possible to bring a jig into contact with the plate portion 32 via the bracket opening portion 44 from below the bracket bottom portion 43 in the axial direction and adjust the tilt of the bearing 31 while pushing the plate portion 32. It is possible to adjust the tilt of the bearing 31 and match a center line of the bearing 31 with the central axis C, that is, a center line of the shaft 11.

In the present embodiment, the plate portion 32 includes a plate-portion opening portion 32a extending therethrough in the axial direction. The plate-portion opening portion 32a has a circular shape extending around the central axis C. However, the shape of the plate-portion opening portion 32a may be other shapes, such as a polygonal shape or an elliptical shape. A radial-direction inner end of the plate portion 32 is disposed inwardly in the radial direction of a radial-direction inner end of the bracket bottom portion 43. Therefore, at least a part of the plate portion 32 faces the bracket opening portion 44 in the axial direction. The radial-direction inner end of the plate portion 32 is disposed inwardly in the radial direction of a radial-direction inner end of the outer ring 31b of the bearing 31. In the present embodiment, the plate portion 32 is disposed apart from the bearing 31 in the axial direction. Therefore, even if the radial-direction inner end of the plate portion 32 extends up to a position where it faces the inner ring 31a in the axial direction, the plate portion 32 defines along with a movable portion a proper axial-direction gap. By the plate portion 32, it is possible to suppress the entry of dust into the bearing 31 from below the plate portion 32.

A lower end of the shaft 11 is disposed below a lower end of the plate portion 32. In detail, the shaft 11 protrudes downward from the lower end of the plate portion 32 via the plate-portion opening portion 32a. According to this, it is possible to place the jig along the shaft 11 when bringing the jig into contact with the plate portion 32. Therefore, it is possible to precisely adjust the tilt of the bearing 31 and to improve work efficiency.

In the present embodiment, the lower end of the shaft 11 is disposed above a lower end of the bracket 40. In detail, the lower end of the bracket 40 is a lower end of the bracket bottom portion 43, and the lower end of the shaft 11 is disposed above the lower end of the bracket bottom portion 43. This makes it possible to suppress an increase in an axial-direction length of the motor 1.

The bearing bush 33 is disposed inwardly of the bracket cylindrical portion 42 in the radial direction. The bearing bush 33 contacts a radial-direction inner surface of the bracket cylindrical portion 42 and is fixed to the inside of the bracket recessed portion 41. The bearing bush 33 has elasticity. The bearing bush 33 is made of, for example, synthetic rubber, natural rubber, or thermoplastic elastomer.

In detail, at least a part of the bearing bush 33 is disposed between the bearing 31 and the bracket cylindrical portion 42 in the radial direction. The bearing bush 33 holds the bearing 31. At least a radial-direction outer surface of the outer ring 31b of the bearing 31 contacts the bearing bush 33, and the bearing 31 is fixed to the bearing bush 33. According to this, the bearing bush 33 can absorb vibration, and suppress the vibration of the motor 1. In addition, according to this, noise of the motor 1 can be reduced.

The plate portion 32 may also be formed from a part of the bearing bush 33 that holds the bearing 31. However, in the present embodiment, the plate portion 32 is a separate member from the bearing bush 33. The plate portion 32 is a plate-shaped member 32M facing at least one of a lower surface of the bearing bush 33 and a lower surface of the bearing 31 in the axial direction. In the present embodiment, the plate-shaped member 32M faces both the lower surface of the bearing bush 33 and the lower surface of the bearing 31 in the axial direction. The plate-shaped member 32M contacts the lower surface of the bearing bush 33. The plate-shaped member 32M is a ring member including the plate-portion opening portion 32a. The plate-shaped member 32M may be formed from, for example, a washer.

In the present embodiment, the bearing bush 33 includes a bearing-bush cylindrical portion 33a and a bearing-bush bottom portion 33b. The bearing bush 33 is cup-shaped.

The bearing-bush cylindrical portion 33a extends in the axial direction. In the present embodiment, the bearing-bush cylindrical portion 33a has a cylindrical shape extending around the central axis C. The bearing-bush cylindrical portion 33a is disposed between the bearing 31 and the bracket cylindrical portion 42 in the radial direction. The bearing bush 33 may have a structure including only the bearing-bush cylindrical portion 33a.

The bearing-bush bottom portion 33b extends inwardly in the radial direction from a lower end portion of the bearing-bush cylindrical portion 33a. The bearing-bush bottom portion 33b contacts an upper surface of the plate-shaped member 32M. However, a lower surface of the bearing-bush bottom portion 33b need not directly contact the upper surface of the plate-shaped member 32M, and may indirectly contact the upper surface of the plate-shaped member 32M with another member interposed therebetween. The bearing-bush bottom portion 33b overlaps at least a part of the lower surface of the bearing 31 in the axial direction. In the present embodiment, the bearing-bush bottom portion 33b overlaps a part of the lower surface of the bearing 31 in the axial direction. In detail, an upper surface of the bearing-bush bottom portion 33b and a lower surface of the outer ring 31b contact each other in the axial direction.

According to this, it is possible to increase the contact area between the bearing bush 33 and the bearing 31 and firmly fix the bearing 31. In addition, it is possible to increase the contact area between the bearing 31 and the bearing bush 33 and increase a vibration absorption effect. Further, by the bearing-bush bottom portion 33b, it is possible to suppress the entry of dust into the bearing 31 from the lower side of the bearing-bush bottom portion 33b. Although the upper surface of the bearing-bush bottom portion 33b may contact the inner ring 31a, it is desirable that the upper surface of the bearing-bush bottom portion 33b not contact the inner ring 31a. This makes it possible to avoid contact of the bearing bush 33 with a movable portion.

In the present embodiment, the bearing-bush bottom portion 33b includes a bearing-bush opening portion 33c extending therethrough in the axial direction. A lower end portion of the shaft 11 extends through the bearing-bush opening portion 33c and protrudes downward from a lower end of the bearing-bush bottom portion 33b. The bearing-bush opening portion 33c has a circular shape extending around the central axis C. However, the shape of the bearing-bush opening portion 33c may be other shapes, such as a polygonal shape or an elliptical shape. The bearing-bush opening portion 33c need not be provided.

In the present embodiment, the radial-direction inner end of the plate-shaped member 32M is disposed inwardly in the radial direction of a radial-direction inner end of the bearing-bush bottom portion 33b. Therefore, by the plate-shaped member 32M, it is possible to suppress the entry of dust into the bearing 31 from the lower side of the plate-shaped member 32M. A radial-direction outer end of the plate-shaped member 32M contacts the radial-direction inner surface of the bracket cylindrical portion 42. According to this, it is possible to increase the area of the plate-shaped member 32M and increase the range in which the bearing 31 is pushed. By this, the center line of the shaft 11 and the center line of the bearing 31 can be easily aligned.

The bearing bush 33 need not be provided. In this case, a structure in which the radial-direction outer surface of the outer ring 31b and the radial-direction inner surface of the bracket cylindrical portion 42 contact each other and the bearing 31 is directly held by the bracket cylindrical portion 42 may be provided. In this case, the plate-shaped member 32M may be formed so as to contact the lower surface of the bearing 31.

The elastic member 34 is disposed inwardly of the bracket cylindrical portion 42 in the radial direction. The elastic member 34 is held in the inside of the bracket recessed portion 41. The elastic member 34 directly or indirectly contacts both a lower surface of the plate portion 32 and an upper surface of the bracket bottom portion 43 in the axial direction. In the present embodiment, the elastic member 34 directly contacts both the lower surface of the plate-shaped member 32M and the upper surface of the bracket bottom portion 43 in the axial direction. The elastic member 34 may be formed from, for example, a wave washer including an opening portion (not shown) extending therethrough in the axial direction. By a force applied from the elastic member 34, the plate-shaped member 32M is pushed towards the bearing bush 33. By this, the upper surface of the plate-shaped member 32M and the lower surface of the bearing-bush bottom portion 33b contact each other.

By providing the elastic member 34 at the bearing section 30, it is possible to apply upward pressure to the outer ring 31b of the bearing 31 via the plate portion 32 (the plate-shaped member 32M). That is, it is possible to apply a proper pressure to the bearing 31. In addition, since the bracket 40 can hold the bearing 31 with the elastic member 34 interposed therebetween, it is possible to reduce the vibration of the motor 1.

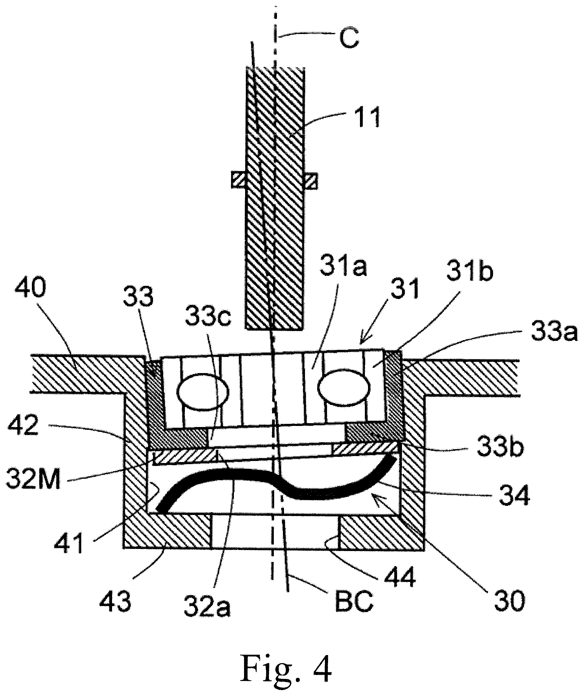

Figs. 4, 5, and 6 are diagrams for describing a method of manufacturing the motor 1 according to an embodiment of the present invention. Figs. 4 to 6 are schematic longitudinal sectional views. The manufacturing process proceeds from Figs. 4 to 6 in that order.

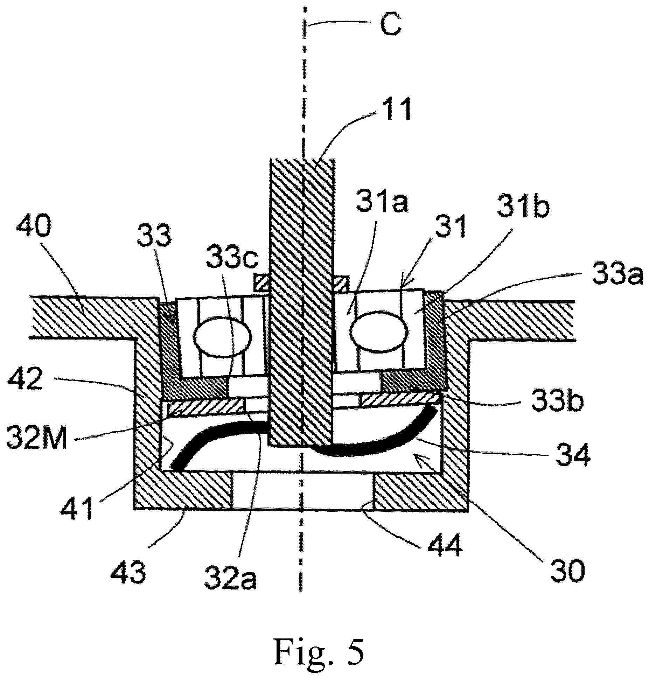

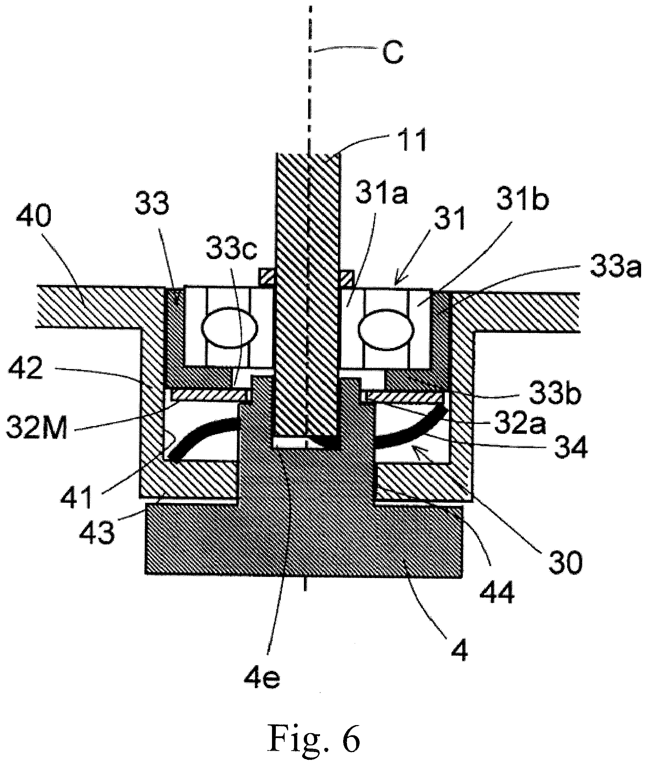

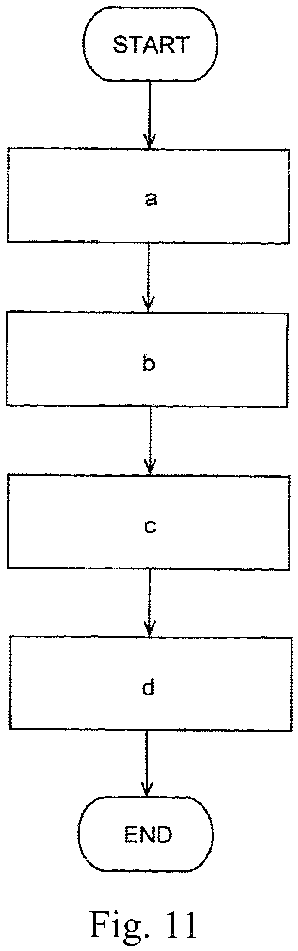

Fig. 11 is a flowchart showing a method of manufacturing the motor 1 according to an exemplary embodiment of the present invention. As shown in Fig. 11, the method of manufacturing the motor 1 includes step a), step b), step c), and step d). Fig. 4 is a diagram for describing step a) and step b). Fig. 5 is a diagram for describing step c). Fig. 6 is a diagram for describing step d) .

Step a) is a step in which the plate-shaped member 32M is put into of the bracket recessed portion 41 recessed in the axial direction of the bracket 40. As shown in Fig. 4, in the present embodiment, the elastic member 34 is also put into the bracket recessed portion 41. First, the elastic member 34 is put into the bracket recessed portion 41, and then the plate-shaped member 32M is put into the bracket recessed portion 41. The elastic member 34 and the plate-shaped member 32M are put into the bracket recessed portion 41 such that the opening portion is oriented in the vertical direction.

Step b) is a step in which, after step a), the bearing 31 is put into the bracket recessed portion 41. In detail, the bearing 31 is fitted to the cup-shaped bearing bush 33. With the bearing 31 mounted on the bearing bush 33, the bearing 31 is fitted into the bracket recessed portion 41. Here, by a force that is applied from the elastic member 34, the upper surface of the plate-shaped member 32M contacts the lower surface of the bearing-bush bottom portion 33b.

In step b), as shown in Fig. 4, the bearing 31 is sometimes fixed to the inside of the bracket recessed portion 41 with the bearing 31 being tilted. In detail, a center line BC of the bearing 31 is sometimes tilted with respect to the central axis C. Such a tilt tends to occur in, for example, a structure in which the bearing 31 is mounted on the bearing bush 33 and is fixed to the inside of the bracket recessed portion 41. When the bearing 31 tilts, a proper pressure may no longer be applied to the bearing 31 by the elastic member 34.

Step c) is a step in which, after step b), the shaft 11 is mounted on the bearing 31. In detail, as shown in Fig. 5, the shaft 11 is press-fitted to the inner ring 31a. The bearing 31 may be tilted in step c). The tilt of the bearing 31 may be a cause of the generation of noise.

Step d) is a step in which, after step c), a jig 4 is inserted into the bracket recessed portion 41 via the bracket opening portion 44 extending through the bracket recessed portion 41 in the axial direction, and the jig 4 is brought into contact with the plate-shaped member 32M. As shown in Fig. 6, in the present embodiment, by pushing upward the jig 4 brought into contact with the plate-shaped member 32M, it is possible to push the bearing bush 33 and adjust the tilt of the bearing 31. By adjusting the tilt of the bearing 31, it is possible to apply a proper pressure to the bearing 31 from the elastic member 34.

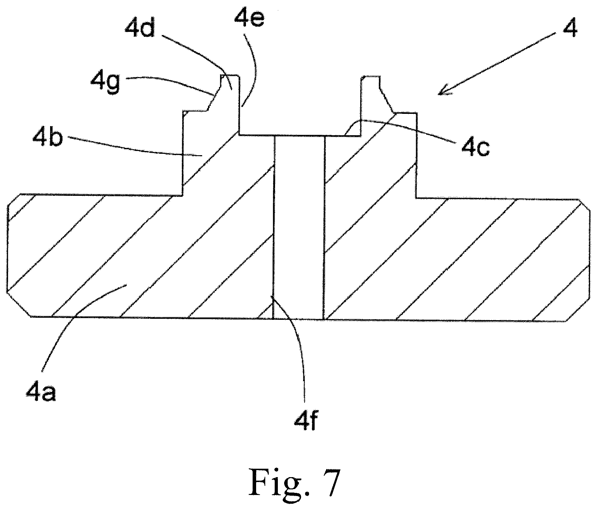

Fig. 7 is a sectional view of the jig 4 that is used in the method of manufacturing the motor according to the exemplary embodiment of the present invention. The jig 4 includes a jig base portion 4a and a jig disc portion 4b. The jig base portion 4a and the jig disc portion 4b have circular shappes having the same center position in plan view. The diameter of the jig disc portion 4b, provided on the upper side of the jig base portion 4a, is smaller than the diameter of the jig base portion 4a. A disc-portion recessed portion 4c whose center position is the same as that of the jig base portion 4a and that is circular in plan view is provided at a central portion of an upper surface of the jig disc portion 4b. The disc-portion recessed portion 4c is recessed downward. A disc-portion cylindrical portion 4d that extends towards the upper side and that surrounds the disc-portion recessed portion 4c is provided at the upper surface of the jig disc portion 4b. The disc-portion cylindrical portion 4d has a cylindrical shape having the same center position and diameter as those of the disc-portion recessed portion 4c. The disc-portion recessed portion 4c and the disc-portion cylindrical portion 4d form a jig recessed portion 4e recessed towards the lower side in a center line direction of the jig 4. That is, the jig 4 includes the jig recessed portion 4e. In the present embodiment, the jig recessed portion 4e is connected to a jig through hole 4f extending through the jig 4 in the center line direction. However, the jig through hole 4f need not be provided. An inclined surface 4g where the outside diameter of the disc-portion cylindrical portion 4d is increased in the downward direction is provided at a radial-direction outer surface of the disc-portion cylindrical portion 4d.

In the example shown in Fig. 6, the side of the jig recessed portion 4e is faced upward and a part of the jig 4 is put into the bracket recessed portion 41 via the bracket opening portion 44. In detail, the upper surface of the jig disc portion 4b is in contact with the plate-shaped member 32M. In step d), one end portion of the shaft 11 is inserted into the jig recessed portion 4e. In the present embodiment, the lower end portion of the shaft 11 is inserted into the jig recessed portion 4e. The inside diameter of the jig recessed portion 4e is equal to the outside diameter of the one end portion of the shaft 11. More precisely, the inside diameter of the jig recessed portion is slightly larger than the outside diameter of the one end portion of the shaft 11. According to this, when bringing the jig 4 into contact with the plate-shaped member 32M, it is possible to dispose the jig 4 along the shaft 11 and bring the jig 4 closer to the plate-shaped member 32M. In the present embodiment, a structure in which the disc-portion cylindrical portion 4d enters the plate-portion opening portion 32a and the bearing-bush opening portion 33c is provided. This makes it possible to increase the axial-direction length of the jig recessed portion 4e and to facilitate the placing of the jig 4 along the shaft 11.

In the manufacturing method of the present embodiment, it is possible to easily adjust the tilt of the bearing 31 by bringing the jig 4 into contact with the plate-shaped member 32M and pushing the jig 4. According to the manufacturing method of the present embodiment, it is possible to efficiently align the center line of the bearing 31 with the central axis C, that is, the center line of the shaft 11. In addition, since it is possible to push the plate-shaped member 32M by the jig recessed portion 4e while placing the jig 4 along the shaft 11, it is possible to increase the efficiency with which the center line of the bearing 31 is aligned with the center line C, that is, with the center line of the shaft 11, and precisely adjust the tilt.

Next, an embodiment of the blower 2 on which the motor 1 of the present embodiment is mounted is described. As shown in Figs. 1 and 2, the blower 2 includes the motor 1 and an impeller 100. The blower 2 further includes a diffuser 110, an impeller cover 120, and a circuit board 130.

The impeller 100 is mounted on the shaft 11. The impeller 100 is formed with a cylindrical shape and is disposed outwardly of the shaft 11 in the radial direction. When the shaft 11 is rotated by driving the motor 1, the impeller 100 rotates together with the shaft 11. That is, the impeller 100 rotates around the central axis C.

The diffuser 110 is disposed above the motor housing 50. The diffuser 110 is made of, for example, resin. The diffuser 110 is fixed to the motor housing 50 by, for example, a fixing member, such as a screw. The diffuser 110 guides air current sent from the impeller 100.

The impeller cover 120 is disposed above the impeller 100 and covers the impeller 100. The impeller cover 120 has a cylindrical shape tapering towards the axial-direction upper side. The impeller cover 120 includes a cover inlet 121 on the upper side thereof. The impeller cover 120 is fixed to the diffuser 110.

The circuit board 130 is disposed below the bracket 40. By using a fixing member 131, such as a screw, the circuit board 130 is fixed to the bracket 40 with a predetermined distance from the bracket 40. In the present embodiment, the circuit board 130 has a circular shape, and is made of, for example, resin, such as epoxy resin. Electronic components are disposed on the circuit board 130. Electronic components include, for example, an inverter and a control circuit. The circuit board 130 is electrically connected to the stator 20 by a connection terminal (not shown).

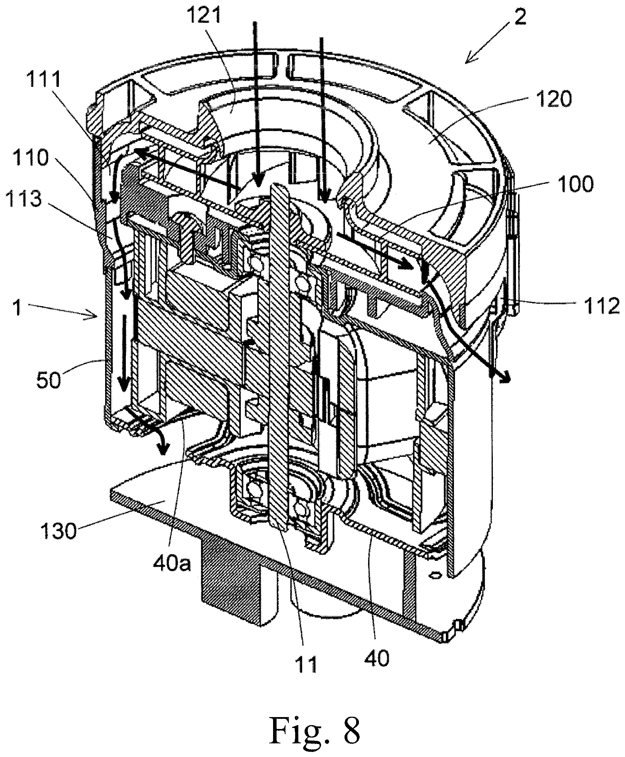

Fig. 8 is a sectional perspective view of the blower 2 according to the embodiment of the present invention. When the impeller 100 is rotated by driving the motor 1, a fluid from the cover inlet 121 is sucked into the blower 2. Thick-line arrows in Fig. 8 indicate the flow of the fluid when driving the motor 1. A typical example of the fluid is air.

The fluid sucked in from the cover inlet 121 is sucked into the impeller 100. The impeller 100 discharges the sucked-in fluid outward in the radial direction via an internal channel. The fluid discharged from the impeller 100 enters a gap portion 111 that is provided at an upper portion of the diffuser 110. A part of the fluid that has entered the gap portion 111 is discharged to the outside via an outer-side discharge port 112 extending through a side surface of the diffuser 110 in the radial direction.

Of the fluid that has entered the gap portion 111, the fluid that was not discharged to the outside enters an inner side of the motor housing 50 via an inner-side discharge port 113 that is connected to the gap portion 111. By the flow of this fluid, it is possible to cool the inside of the motor 1. The fluid guided to the inner side of the motor housing 50 is discharged to the outside via the bracket through hole 40a. By the fluid discharged from the bracket through hole 40a, it is possible to cool the circuit board 130.

According to the present embodiment, since it is possible to properly align the center line of the bearing 31 of the motor 1 with the central axis C, that is, the center line of the shaft 11, it is possible to suppress the generation of vibration and noise in the blower 2.

Next, an embodiment of the vacuum cleaner 3 on which the blower 2 according to the exemplary embodiment of the present embodiment is mounted is described. Fig. 9 is a perspective view of the vacuum cleaner 3 according to an exemplary embodiment of the present invention. As shown in Fig. 9, the vacuum cleaner 3 includes the blower 2. The vacuum cleaner is a so-called stick-type electric vacuum cleaner. The vacuum cleaner including the blower 2 may be other types of electric vacuum cleaners, such as a robot-type electric vacuum cleaner, a canister-type electric vacuum cleaner, or a handy-type electric vacuum cleaner.

The vacuum cleaner 3 includes a casing 201 including an air intake portion 202 in a lower surface thereof and an air discharge portion 203 in an upper surface thereof. The vacuum cleaner 3 includes a charging battery (not shown), and operates by electric power that is supplied from the battery. However, the vacuum cleaner 3 may include a power cord and may be operated by electric power that is supplied via the power cord connected to a power receptacle provided at a wall surface of a living room.

An air passage (not shown) that connects the air intake portion 202 and the air discharge portion 203 is formed in the casing 201. A dust collecting portion (not shown), a filter (not shown), and the blower 2 are disposed in this order from the air intake portion 202 (upstream) towards the air discharge portion 203 (downstream) in the inside of the air passage. Dirt, such as dust, contained in the air that flows in the inside of the air passage is collected by the filter, and is collected in the inside of the dust collecting portion having the form of a container. The dust collecting portion and the filter are removably provided with respect to the casing 201.

A grasping portion 204 and an operating operation 205 are provided at an upper portion of the casing 201. A user can grasp the grasping portion 204 and move the vacuum cleaner 3. The operating portion 205 includes a plurality of buttons 205a. The user sets an operation of the vacuum cleaner 3 by operating any of the buttons 205a. For example, by operating the buttons 205a, instructions are given to, for example, start driving the blower 2, stop driving the blower 2, and change the rotation speed of the blower 2. A rod-shaped suction tube 206 is connected to the air intake portion 202. A suction nozzle 207 is mounted on an upstream end of the suction tube 206 such that the suction nozzle 207 is removable from the suction tube 206. The upstream end of the suction tube 206 corresponds to a lower end of the suction tube 206 in Fig. 9.

According to the present embodiment, since it is possible to properly align the center line of the bearing 31 of the motor 1 with the central axis C, that is, the center line of the shaft 11, it is possible to suppress the generation of vibration and noise in the vacuum cleaner 3.

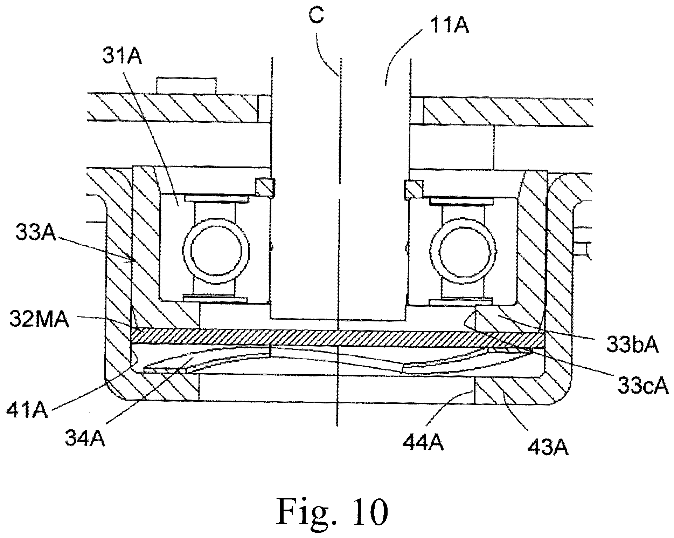

In the present embodiment described above, the plate portion 32 has a structure including the plate-portion opening portion 32a. However, the plate portion 32 need not include the plate-portion opening portion 32a. Fig. 10 is a diagram for describing a modification of the motor 1 according to the exemplary embodiment of the present invention.

A plate-shaped member 32MA that is disposed in the inside of a bracket recessed portion 41A has a disc shape. The plate-shaped member 32MA does not include an opening portion extending therethrough in the axial direction. The plate-shaped member 32MA is disposed below a lower end of a shaft 11A. The lower end of the shaft 11A is disposed at a location corresponding to a lower end of a bearing bush 33A that holds a bearing 31A, or above the lower end of the bearing bush 33A. In the present modification, the bearing bush 33A includes a bearing-bush opening portion 33cA in a bearing-bush bottom portion 33bA. The lower end of the shaft 11A extends up to the bearing-bush opening portion 33cA. However, the bearing bush 33A need not include the bearing-bush opening portion 33cA.

The plate-shaped member 32MA covers a bracket opening portion 44A in the axial direction. In plan view from the axial direction, the area of the plate-shaped member 32MA is greater than the area of the bracket opening portion 44A. In the present modification, an elastic member 34A that is disposed on the lower side of the plate-shaped member 32MA exists in the inside of the bracket recessed portion 41A. Therefore, the plate-shaped member 32MA contacts the bearing bush 33A in the axial direction, and does not contact in the axial direction a bracket bottom portion 43A including a bracket opening portion 44A. The plate-shaped member 32MA is disposed above and apart from the bracket bottom portion 43A. However, the elastic member 34A need not be provided, and the plate-shaped member 32MA may contact the bracket bottom portion 43A in the axial direction.

Even in the present modification, it is possible to insert a jig into the bracket recessed portion 41A via the bracket opening portion 44A, bring the jig into contact with the plate-shaped member 32MA, and adjust the tilt of the bearing 31A. In addition, according to the present modification, since the bracket opening portion 44A is covered by the plate-shaped member 32MA, it is possible to suppress the entry of dust into the upper side of the plate-shaped member 32MA.

The various technical features that are disclosed in the present description may be variously changed within a scope that does not depart from the spirit of the technical creations thereof. A plurality of the embodiments and modifications that are described in the present description may be combined and executed within an allowable range.

The present invention may be used in, for example, an electrical device, such as a vacuum cleaner, including a blower.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A motor (1) comprising:
a rotor (10) that includes a shaft that is disposed along a central axis;
a stator (20) that faces the rotor (10) in a radial direction;
a bearing section (30) that supports the rotor (10) such that the rotor (10) is rotatable with respect to the stator (20); and
a bracket (40) that holds the bearing section (30),
wherein the bracket (40) includes
a cylindrical bracket cylindrical portion (42) that extends in an axial direction and that is disposed outwardly of the bearing section (30) in the radial direction, and
a bracket bottom portion that extends inwardly in the radial direction from a lower end portion of the bracket cylindrical portion (42) and that includes a bracket opening portion extending therethrough in the axial direction,
wherein the bearing section (30) includes
a bearing that rotatably supports the shaft, and
a plate portion (32) that is disposed below the bearing and that extends in a direction orthogonal to the central axis, and
wherein at least a part of the plate portion (32) faces the bracket opening portion in the axial direction.

2. The motor (1) according to Claim 1, wherein the bearing section (30) further includes
a bearing bush that holds the bearing and that has elasticity, at least a part of the bearing bush being disposed between the bearing and the bracket cylindrical portion (42) in the radial direction, and
wherein the plate portion (32) is a plate-shaped member that faces at least one of a lower surface of the bearing bush and a lower surface of the bearing in the axial direction.

3. The motor (1) according to Claim 2, wherein a radial-direction outer end of the plate-shaped member contacts a radial-direction inner surface of the bracket cylindrical portion (42).

4. The motor (1) according to Claim 2 or 3, wherein the bearing bush includes
a bearing-bush cylindrical portion that extends in the axial direction and that is disposed between the bearing and the bracket cylindrical portion (42) in the radial direction, and
a bearing-bush bottom portion that extends inwardly in the radial direction from a lower end portion of the bearing-bush cylindrical portion, and that contacts an upper surface of the plate-shaped member, and
wherein the bearing-bush bottom portion overlaps at least a part of the lower surface of the bearing in the axial direction.

5. The motor (1) according to any one of Claims 2 to 4, wherein the plate-shaped member is disposed below a lower end of the shaft and covers the bracket opening portion in the axial direction.

6. The motor (1) according to any one of Claims 1 to 5, wherein the bearing section (30) further includes
an elastic member that directly or indirectly contacts both a lower surface of the plate portion (32) and an upper surface of the bracket bottom portion in the axial direction.

7. The motor (1) according to any one of Claims 1 to 6, wherein a lower end of the shaft is disposed above a lower end of the bracket (40).

8. The motor (1) according to any one of Claims 1 to 4, wherein the plate portion (32) includes a plate-portion opening portion that extends therethrough in the axial direction,
wherein a radial-direction inner end of the plate portion (32) disposed inwardly in the radial direction of a radial-direction inner end of the bracket bottom portion, and
wherein a lower end of the shaft is disposed below a lower end of the plate portion (32).

9. The motor (1) according to Claim 8, wherein the bearing is a ball bearing, and
wherein the radial-direction inner end of the plate portion (32) is disposed inwardly in the radial direction of a radial-direction inner end of an outer ring of the bearing.

10. A blower (2) comprising:
the motor (1) according to any one of Claims 1 to 9; and
an impeller (100) that is mounted on the shaft and that rotates around the central axis.

11. A vacuum cleaner comprising:
the blower (2) according to Claim 10.
